# EUROPÄISCHE PATENTSCHRIFT

(11) **EP 3 573 875 B1**
(45) Veröffentlichungstag und Bekanntmachung des Hinweises auf die Patenterteilung: **02.12.2020**
(21) Anmeldenummer: 18704871.5
(22) Anmeldetag: 22.01.2018
(51) Int. Cl.: B62D 1/185, F16C 29/04

(54) **LENKWELLE FÜR EIN KRAFTFAHRZEUG**
STEERING SHAFT FOR A MOTOR VEHICLE
ARBRE DE DIRECTION POUR UN VÉHICULE AUTOMOBILE

(30) Priorität: 30.01.2017 DE 102017201376
(43) Veröffentlichungstag der Anmeldung: 04.12.2019
(73) Patentinhaber: thyssenkrupp Presta AG, 9492 Eschen (LI); thyssenkrupp AG, 45143 Essen (DE)
(72) Erfinder: SCHMIDT, René Marco, 9464 Lienz (CH)
(74) Vertreter: thyssenkrupp Intellectual Property GmbH
(86) Internationale Anmeldenummer: PCT/EP2018/051426
(87) Internationale Veröffentlichungsnummer: WO 2018/138043

(56) Entgegenhaltungen:
- DE-A1-102011 012 889
- DE-U1- 20 212 294
- JP-A- 2005 083 532
- KR-B1- 101 500 442
- US-A1- 2017 268 574

## Beschreibung

### Stand der Technik

Die Erfindung betrifft eine Lenkwelle für ein Kraftfahrzeug, umfassend eine Hohlwelle und eine Innenwelle, welche koaxial in der Hohlwelle angeordnet, relativ zur Hohlwelle in Richtung der Längsachse der Lenkwelle axial teleskopierbar und mit der Hohlwelle über in Richtung der Längsachse abrollbare Kugeln drehmomentschlüssig verbunden ist, wobei die Kugeln in zumindest einer axialen Reihe angeordnet sind, wobei die in der Reihe zueinander benachbarte Kugeln jeweils einen vorgegebenen Abstand voneinander haben, wobei zumindest einer der Abstände zwischen den jeweils benachbarten Kugeln innerhalb einer Reihe verschieden zu zumindest einem anderen der Abstände ist.

Der Einsatz einer in ihrer Achsrichtung teleskopierbaren Lenkwelle in einem Kraftfahrzeug ermöglicht eine Verstellung der Lenksäule zur Einstellung der Lenkradposition in Längsrichtung. Außerdem kann die Lenkwelle im Fall eines Crashs in Richtung ihrer Längsachse in sich zusammengeschoben werden, wodurch wirksam verhindert wird, dass die Lenksäule in das Innere der Fahrgastzelle eindringt und zu Verletzungen der Insassen führt. Dies wird erreicht durch zwei in Längsrichtung gegeneinander teleskopierbare Wellen, nämlich einer Hohlwelle, die als äußere Welle bzw. Außenwelle durch ein rohrförmiges Hohlprofil gebildet wird, und einer darin in Richtung der Längsachse der Lenkwelle teleskopartig, d.h. axial verschieblich gelagerten inneren Welle, an deren bezüglich der Fahrtrichtung hinteren Ende das Lenkrad montiert ist. Durch teleskopierendes Zusammenschieben oder Ausziehen von Innenwelle und Hohlwelle in Achsrichtung, d.h. in Richtung der Längsachse, kann die Lenkwelle verkürzt oder verlängert werden.

Zwischen der Hohlwelle und der Innenwelle sind in der gattungsgemäßen Bauweise zumindest eine, in der Regel mehrere Kugeln als Wälzkörper angeordnet, die zwischen der Außenfläche der Innenwelle und der Innenfläche der Hohlwelle in Richtung der Längsachse in Längsrichtung abrollen können. Dadurch wird eine Linearlagerung für eine leichtgängige wälzkörpergelagerte axiale Verstellbarkeit der Innenwelle relativ zur Hohlwelle realisiert. Zur Übertragung des zur Lenkung eingebrachten Drehmoments weisen die Innenwelle auf ihrer Außenseite und die Hohlwelle auf ihrer Innenseite nut- oder rillenförmige, einander radial gegenüberliegende, in Achsrichtung parallel zur Längsachse verlaufende Kugellaufbahnen auf, in denen die Kugeln angeordnet sind und als Formschlusselemente dienen, wodurch zwischen Innen- und Hohlwelle ein bezüglich einer Drehung um die Längsachse wirksamer Formschluss gebildet wird, der Hohl- und Innenwelle drehmomentschlüssig miteinander verbindet. Gattungsgemäße Lenkwellen werden daher auch als Rollschiebewellen bezeichnet.

Im Folgenden werden die Wälzkörper durchgehend als Kugeln bezeichnet, wobei anstelle von Kugeln auch Rollen oder abweichend geformte Wälzkörper eingesetzt werden können.

In Lenkwellen, wie sie beispielsweise aus der DE 10 2014 017 555 A1 bekannt sind, ist jeweils eine Mehrzahl von Kugeln in einer axialen Reihe angeordnet. Darin wird eine derartige Reihe, auch als Kugelreihe bezeichnet, jeweils die aus einer Mehrzahl von in Längsrichtung, aufeinander folgend, d.h. jeweils in Achsrichtung mit Abstand zueinander benachbart angeordneten Kugeln gebildet. Die definierten Abstände können dadurch eingehalten werden, dass die Kugeln in einem Kugelkäfig zwischen den Wellen und mit Abstand relativ zueinander in Position gehalten und dabei um ihre Abrollachsen, d.h. um ihren Kugelmittelpunkt frei drehbar aufgenommen sind.

In der Regel sind in einem Kugelkäfig zwei oder mehrere derartige Reihen umfangsverteilt angeordnet, wodurch die Innenwelle in der Hohlwelle koaxial zentriert gelagert ist. Innerhalb einer Reihe sind die Kugeln äquidistant angeordnet, wobei axial benachbarte Kugeln jeweils einen vorgegebenen, gleichen Abstand in Längsrichtung voneinander haben, wie in der genannten DE 10 2014 017 555 A1. Der Abstand der Kugeln wird jeweils zwischen den Kugelmittelpunkten gemessen. Entsprechend erfolgt die Abstützung zwischen Innen- und Hohlwelle über gleichmäßige Abfolge äquidistant angeordneter Stützstellen, welche durch die Kontaktstellen zwischen Kugeln und den Kugellaufbahnen von Innen- und Hohlwelle gebildet werden.

Die Anordnung der Kugeln in Reihen ermöglicht eine leichtgängige Linearführung, wobei die absolute Tragfähigkeit durch Anzahl und Abstand der Kugeln in den Reihen an die Anforderungen im Betrieb angepasst werden kann, wobei sich unter Annahme biegesteifer Wellen die gleiche Hertzsche Pressung innerhalb einer Reihe ergibt, mit der jede der Kugeln an ihren Kontaktflächen gegen die Kugellaufbahnen von Innen- und Hohlwelle angepresst wird. Nachteilig ist jedoch, dass in der Praxis durch Schwingungen und Querkräfte elastische Biegeverformungen von Innen- und Hohlwelle auftreten, so dass einzelne Kugeln - beispielsweise in den Endbereichen - eine höhere Anpresskraft erfahren, als die übrigen Kugeln derselben Reihe. Dadurch kann unerwünschte Grübchenbildung auftreten, bei der auf Grund der vorhandenen Hertzschen Pressung das Spannungsmaximum unterhalb der Oberfläche der Laufbahn liegt und es dadurch bei der Überschreitung der Festigkeit des Werkstoffes der Innenwelle bzw. der Hohlwelle zu einer Rissbildung bis zur Oberfläche der Laufbahn kommt und somit Material aus der Oberfläche der Laufbahn herausbricht. Weiterhin kann auch sogenanntes "false brinelling" auftreten, bei dem die Kugellaufbahnen durch Schwingungen an den Kontaktstellen der Kugeln ebenfalls lokal plastisch deformiert werden und es zu einer Muldenbildung auf der Laufbahn kommt. Grübchen und Mulden sind nachteilig bei einer wechselseitigen Drehmomentenübertragung, da dadurch ein merkbares Spiel zwischen Innenwelle und Außenwelle entsteht. Weiterhin ist die Laufruhe beim Teleskopieren durch die Grübchen und Mulden auf den Laufbahnen nachteilig beeinflusst.

Im Stand der Technik kann derartigen negativen Effekten lediglich durch Einsatz einer größeren Anzahl von Kugeln und einer Verringerung der Abstände zwischen den Kugeln zur Erhöhung der Tragfähigkeit begegnet werden. Dadurch werden jedoch das Gewicht und der Fertigungsaufwand erhöht.

Eine Lenkwelle der eingangs genannten Art ist beispielsweise aus der JP 2005 083532 A oder der DE 10 2011 012889 A1 bekannt. Durch die Anordnung der Kugeln besteht dabei das Problem von unerwünschten Schwingungen und Resonanzen.

Angesichts der vorangehend erläuterten Problematik ist es eine Aufgabe der vorliegenden Erfindung, eine verbesserte Lenkwelle zur Verfügung zu stellen, welche verbessertes Schwingungsverhalten hat.

### Darstellung der Erfindung

Diese Aufgabe wird durch eine Lenkwelle für ein Kraftfahrzeug mit den Merkmalen des Anspruchs 1 gelöst. Vorteilhafte Weiterbildungen ergeben sich aus den Unteransprüchen.

Erfindungsgemäß wird für eine Lenkwelle mit den eingangs genannten gattungsgemäßen Merkmalen vorgeschlagen, dass zumindest zwei Reihen in Umfangsrichtung beabstandet zueinander angeordnet sind, wobei die Reihen eine unterschiedliche Anordnung der Abstände zwischen den Kugeln aufweisen.

Erfindungsgemäß ist vorgesehen, dass zumindest zwei Reihen in Umfangsrichtung beabstandet zueinander angeordnet sind, wobei die Reihen eine unterschiedliche Anordnung der Abstände zwischen den Kugeln aufweisen. Wie bereits aus dem zitierten Stand der Technik bekannt, kann die Innenwelle zwischen zwei, drei, vier oder mehr über den Umfang verteilten Reihen von Kugeln zentriert gehalten und gelagert sein. Zur Realisierung der Erfindung ist es vorgesehen, dass die Abstände innerhalb jeder der Reihen erfindungsgemäß unterschiedlich sind.Unterschiedliche Reihen können aber auch eine unterschiedliche Anordnung der Abstände aufweisen. Es ist beispielsweise möglich, dass zwei oder mehr Kugelreihen mit identischem Muster der Abstände, d.h. derselben Abfolge unterschiedlicher Abstände in Achsrichtung gegeneinander versetzt angeordnet sind. Dabei können die Kugeln von in Umfangsrichtung benachbarten Reihen zumindest teilweise auf Lücke angeordnet sein, d.h. in Achsrichtung versetzt. Dadurch können unterschiedliche Querbelastungen wirksam abgefangen werden, und unterschiedliche Eigenschwingungen unterdrückt werden können. Daraus resultiert der Vorteil, dass das Schwingungsverhalten der Lenkwelle insgesamt verbessert wird, und insbesondere unerwünschte Resonanzen unterdrückt werden können und das Übertragungsverhalten dahingehend verbessert ist, dass unerwünschte, störende Schwingungen schlechter übertragen werden.

In einer Kugelreihe liegt zwischen zwei benachbarten Kugeln zumindest ein erster Abstand vor, der kleiner oder größer ist als ein zweiter Abstand zwischen einem anderen Paar von benachbarten Kugeln, wobei die Abstände jeweils zwischen den Abrollachsen der Wälzkörper, also den Kugelmittelpunkten gemessen werden.

Dadurch ist es möglich, innerhalb der Länge einer Kugelreihe die Kugeln in Achsrichtung , dies ist die Richtung der Längsachse, in Abhängigkeit von lokal unterschiedlichen Anpresskräften aufgrund von Biegeverformungen der Wellen enger oder weiter beabstandet anzuordnen, und auf diese Weise die an den Kontaktstellen der Kugeln an den Wellen wirkenden Anpresskräfte zu vergleichsmäßigen. Hierzu können die Kugeln in einem ersten Längsabschnitt, in dem auf die Kugeln durch Biegeverformungen der Wellen höhere radiale Anpresskräfte wirken, enger beabstandet werden, also einen kleineren ersten Abstand voneinander haben, als in einem zweiten Längsabschnitt, in dem geringere Anpresskräfte aus die Kugeln ausgeübt werden, wo die Kugeln einen relativ zum ersten Abstand größeren, zweiten Abstand voneinander erhalten können, so dass sie weiter voneinander beabstandet sind. In Bereichen höherer radialer Anpresskräfte können die Kugeln in Achsrichtung dichter angeordnet werde, oder anders ausgedrückt kann eine größere Anzahl von Kugeln pro Länge der Lenkwelle angeordnet werden, um lokal eine höhere Kugeldichte in Achsrichtung realisiert werden.

Um die im Betrieb zu erwartenden Querbelastungen zu berücksichtigen kann ein in Verfahren zur Anpassung der Abstände der Kugeln vorsehen, dass zunächst über die Länge einer Kugelreihe auftretenden radialen Querkräfte bestimmt werden. Dies kann empirisch durch Messungen erfolgen, oder anhand von Berechnungen oder Simulationen, welche Schwingungen und andere Betriebszustände mit einbeziehen. Das dabei erhaltene Belastungsprofil gibt die lokale Kraftverteilung pro Länge an, in Form einer Kraftkurve, in der die radiale Kraft (Querkraft) über die Länge aufgetragen ist. Daraus ergibt sich auch die Anpresskraft, die jeweils auf zwei benachbarte Kugeln ausgeübt wird. Gemäß dem erfindungsgemäßen Verfahren wird der Abstand benachbarter Kugeln an die Verteilung der Querkraft angepasst. Dabei wird der Abstand in Bereichen einer höheren lokalen Querkraft verringert, also die Anzahl der Kugeln pro Länge zur Vergrößerung der vorgenannten Kugeldichte erhöht, und in Bereichen einer niedrigeren Querkraft verringert, so dass eine kleinere lokale Kugeldichte eingestellt wird. Anders ausgedrückt wird der Abstand zwischen benachbarten Kugeln in einem umgekehrten Verhältnis zu der auf diese Kugeln ausgeübten Anpresskraft vorgegeben, und zwar über die Gesamtzahl der über die Länge der Reihe verteilten Kugeln in einer Weise, dass die mittlere Anpresskraft aller Kugeln einer Reihe im Wesentlichen gleich ist, bzw. innerhalb eines vorgegebenen Akzeptanzbereichs bleibt. Auf diese Weise können die Abstände zwischen den Kugeln innerhalb einer Reihe in Abhängigkeit der Verteilung der Querkraft über die Länge vorgegeben werden. Dabei können die einzelnen Abstände innerhalb der Reihe so vorgegeben werden, dass das jeweilige Produkt aus dem Abstand zwischen zwei benachbarten Kugeln und der auf diese Kugeln ausgeübten Anpresskraft über die gesamte Länge der Reihe innerhalb eines vorgegebenen Akzeptanzbereichs liegt. Mit anderen Worten wird die lokale Kugeldichte entsprechend der lokalen Querkraft angepasst, so dass im Mittel in jedem Betriebszustand die auftretenden Querlasten gleichmäßig über die Kugeln einer Kugelreihe verteilt werden.

Dadurch, dass der Abstände an die Verteilung der Querkraft angepasst sind, kann eine vorteilhafte, gleichmäßige Verteilung der auf die Kugeln innerhalb einer Reihe wirkenden Anpresskräfte realisiert werden. Eine dermaßen optimierte Anordnung kann mit weniger Kugeln zur Bereitstellung einer bestimmten Belastbarkeit auskommen als im Stand der Technik bekannte gleichmäßige Anordnungen. Dadurch kann in vorteilhafter Weise Gewicht eingespart werden.

Im Stand der Technik ist es ein Problem, dass durch die regelmäßige Anordnung der Kugeln bestimmte Eigenschwingungen der Lenkwelle begünstigt werden, so dass Resonanzen verbunden mit Geräuschbildung auftreten können. Durch die erfindungsgemäße Anordnung der Kugeln wird die Übertragung von Schwingungen unterdrückt und das Eigenschwingungsverhalten der Lenkwelle verbessert, wodurch unerwünschte Geräusche reduziert werden. Die optimierte Anordnung der erfindungsgemäß unterschiedlichen Abstände kann ebenfalls durch Berechnungen und Simulationen sowie empirisch erfolgen.

In der einfachsten Form können zur Realisierung der Erfindung zwei unterschiedliche Abstände innerhalb einer Reihe vorgesehen sein. Ein erster, kleinerer Abstand zwischen benachbarten Kugeln wird an einem Abschnitt vorgesehen, an dem im Betrieb höhere Querkräfte zu erwarten sind, und ein zweiter, größerer Abstand dort, wo die zu Belastung geringer ist. Auf diese Weise können zwei Werte für die lokale Kugeldichte für eine lineare Anpassung an die Kraftkurve vorgegeben werden.

Eine vorteilhafte Weiterbildung der Erfindung sieht vor, dass zumindest drei der Abstände zwischen den Kugeln innerhalb einer Reihe unterschiedlich voneinander sind. Somit können entsprechend der Anzahl der unterschiedlichen Abstände drei oder mehr Werte für die lokale Kugeldichte zur Anpassung an die Kraftkurve vorgegeben werden. Ein Vorteil ist, dass durch die lokale Anpassung an mindestens drei Positionen innerhalb einer Reihe eine qualitativ bessere Angleichung an die Kraftkurve erfolgen kann. Bereits durch drei unterschiedliche Abstände kann eine verbesserte Anpassung an eine reale Kraftkurve erfolgen. Bevorzugt können die Abstände entsprechend den Werten vorgegeben werden, welche eine die Kraftkurve beschreibende Kraftfunktion an den Längenpositionen der jeweils benachbarten Kugeln annimmt. Dadurch kann eine weitere Vergleichmäßigung der auf sämtliche Kugeln einer Reihe ausgeübten Anpresskräfte erfolgen, die entsprechend innerhalb eines kleineren Akzeptanzbereichs liegen können. Dadurch kann das Eigenschwingungsverhalten der Lenksäule weiter verbessert werden, die Entstehung und Übertragung schädlicher Schwingungen wird verringert und die Geräuschbildung reduziert.

Da die Abstände innerhalb einer Reihe können beginnend von einen Ende ansteigend ausgebildet sind. Ein erster Abstand, der sich zwischen einer ersten, am axialen Ende einer Reihe liegenden ersten Kugel, und einer dazu benachbarten zweiten Kugel befindet, ist dabei kleiner, als weiter von besagtem Ende beabstandete Abstände. Dadurch können am Ende einer Reihe auftretende höhere Querkräfte erfindungsgemäß ausgeglichen werden.

Es kann weiterhin vorteilhaft sein, dass die Abstände innerhalb einer Reihe einen Maximalabstand oder einen Minimalabstand aufweisen, und zu den Enden der Reihe hin abfallend oder ansteigend ausgebildet sind. Durch Schwingungen von Hohl- und Innenwelle können relative Querbewegungen und damit einhergehende Durchbiegungen auftreten, durch die Querkräfte als Anpresskräfte auf die Kugeln ausgeübt werden. Über die Länge der Schwingung ergibt sich dadurch eine gebogene, beispielsweise im Wesentlichen parabel- oder sinusförmige Kraftkurve, die in einer entsprechenden lokalen Anpresskraft resultiert. Tritt dabei die höchste Querkraft im Bereich der Enden einer Reihe auf, kann zu den Enden hin die Kugeldichte erhöht werden durch eine dichtere Anordnung mit kleinerem Abstand. Entsprechend befindet sich zwischen den Enden, wo die Querbelastung geringer ist, ein maximaler Abstand. Falls die höchsten Querkräfte aufgrund der Schwingungsform innerhalb des Verlaufs der Reihe zu erwarten sind, können dort die Kugeln dichter angeordnet sein, wodurch ein minimaler Abstand gebildet wird.

Eine Ausführung kann vorsehen, dass die Abstände innerhalb einer Reihe symmetrisch angeordnet sind. Beispielsweise können die Abstände von ersten Ende der Reihe aus ansteigen, und spiegelsymmetrisch zum zweitem Ende hin abfallen, oder vom ersten Ende aus abfallen, und spiegelsymmetrisch zum zweiten Ende hin ansteigen. Es ist ebenfalls denkbar, dass unterschiedliche Abstände über die Länge einer Reihe in einer abwechselnden oder mehrfach ansteigenden und/oder abfallenden symmetrischen Anordnung ausgestaltet sind. Dadurch können entsprechende zu erwartende Querkräfte ausgeglichen werden. Bevorzugt ist die Symmetrieebene so angeordnet, dass die Längsachse mit der Normalenrichtung der Symmetrieebene übereinstimmt.

Es ist möglich, dass die Abstände innerhalb einer Reihe asymmetrisch angeordnet sind. Eine unsymmetrische oder unregelmäßige Anordnung der Kugeln und damit der Abstände innerhalb einer Reihe kann geeignet sein, um unerwünschte Resonanzen zu vermeiden.

Zu Realisierung der Erfindung kann vorgesehen sein, dass unterschiedliche Reihen eine unterschiedliche Anzahl von Kugeln und/oder unterschiedliche Abstände aufweisen. Werden beispielsweise zwei unterschiedliche Anzahlen von Kugeln über dieselbe Länge einer Reihe verteilt, so ergeben sich unterschiedliche Abstände zwischen den jeweils benachbarten Kugeln.

Es ist ebenfalls möglich, dass zumindest zwei in Umfangsrichtung beabstandet zueinander angeordnete Reihen unterschiedliche Anordnungen der Abstände zwischen den Kugeln aufweisen, beispielsweise unterschiedlich ausgebildete Muster von Abständen wie vorangehend beschrieben. Beispielsweise kann eine erste Reihe erfindungsgemäß mit unterschiedlichen Abständen in einer ersten Anordnung ausgestaltet sein, und eine zweite Reihe mit unterschiedlichen Abständen in einer zweiten Anordnung. Es ist auch denkbar, dass eine Reihe erfindungsgemäß unterschiedliche Abstände aufweist, und eine andere Reihe gleichmäßige Abstände. Durch diese verschiedenen möglichen Ausgestaltungen kann das Schwingungsverhalten der Lenkwelle an den jeweiligen Anwendungsfall angepasst und optimiert werden. Daraus resultiert der Vorteil, dass das Schwingungsverhalten der Lenkwelle insgesamt verbessert wird, und insbesondere verschiedene mögliche Resonanzen unterdrückt werden können. Außerdem kann eine Optimierung bezüglich hoher Belastbarkeit bei geringem Gewicht vorgenommen werden.

Dadurch kann das Schwingungsverhalten der Lenksäule weiter verbessert werden. Die Übertragung schädlicher Schwingungen wird verringert und die Geräuschbildung reduziert.

Eine bevorzugte Ausführung der Erfindung sieht vor, dass koaxial zwischen Innenwelle und Hohlwelle ein Kugelkäfig angeordnet ist, der Aufnahmen aufweist, in denen jeweils eine Kugel frei drehbar aufgenommen ist. In dem Kugelkäfig werden die Kugeln einer jeden Kugelreihe in den Aufnahmen in definierten Abständen der Kugelmittelpunkte bzw. Abrollachsen zueinander gehalten, d.h. die Abstände der Aufnahmen in Achsrichtung entsprechen den Abständen der Kugeln. Durch die Abstände der Aufnahmen können die erfindungsgemäß unterschiedlichen Abstände der Kugeln innerhalb einer Reihe genau vorgegeben und eingehalten werden. Ein Kugelkäfig zur koaxialen Anordnung zwischen einer Hohlwelle und einer darin teleskopierbar angeordneten Innenwelle, kann hohlprofilartig koaxial zur Längsachse ausgebildet sein, wobei eine Aufnahme für eine Kugel jeweils durch eine radial durchgehende Aufnahmeöffnung gebildet wird, in der die Kugel um ihre Abrollachse frei drehbar aufnehmbar ist. Die Achsabstände der Aufnahmeöffnungen bestimmen die Abstände der Kugeln.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer Lenkwelle,
- Figur 2: eine Teilansicht einer Lenkwelle gemäß Figur 1 in auseinander gezogenem Zustand,
- Figur 3: einen Längsschnitt entlang der Längsachse durch die Lenkwelle gemäß Figur 1 in einer ersten beispielhaften Ausführungsform,
- Figur 4: einen Längsschnitt entlang der Längsachse durch eine Lenkwelle gemäß Figur 1 in einer zweiten beispielhaften Ausführungsform,
- Figur 5: eine seitliche Detailansicht einer Lenkwelle in einer erfindungsgemäßen Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

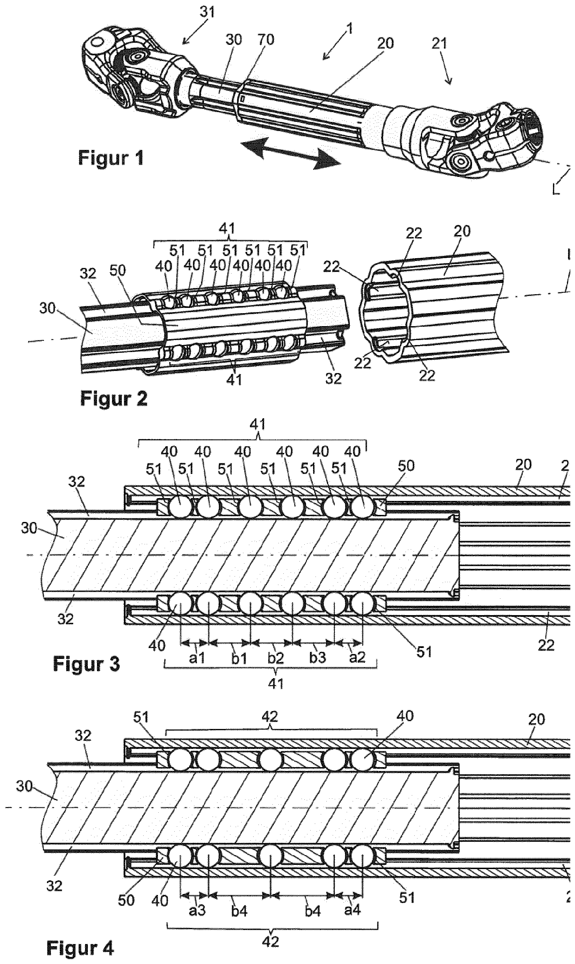

Figur 1 zeigt in perspektivischer Ansicht eine schematisch dargestellte Lenkwelle 1, die eine Hohlwelle 20, auch als äußere Welle oder Außenwelle bezeichnet, und eine Innenwelle 30, auch innere Welle bezeichnet, aufweist, die gegeneinander teleskopierbar sind in Richtung der Längsachse L, d.h. in der mit dem Doppelpfeil angedeuteten Achs- bzw. Längsrichtung.

Die Hohlwelle 20 weist an ihrem freien Ende, welches bezüglich der inneren Welle 30 in Längsrichtung abgewandt ist, eine Gabel 21 auf, welche einen Teil eines Universalgelenks bildet, mit dem die Lenkwelle 10 momentschlüssig mit einem Lenkstrang verbunden sein kann. Entsprechend weist die Innenwelle 30 an ihrem freien Ende, welches bezüglich der Hohlwelle 20 in Längsrichtung abgewandt ist, eine Gabel 31 auf, welche einen Teil eines weiteren Universalgelenks bildet, mit dem die Lenkwelle 1 momentschlüssig mit dem Lenkstrang verbunden sein kann. Die Wellen 20 und 30 sind bevorzugt beide als Hohlprofile aus gut kaltumformbarem Stahl gefertigt.

In Figur 2 zeigt die Lenkwelle 1 gemäß Figur 1, wobei die Innenwelle 30 aus der Hohlwelle 20 in Richtung der Längsachse L herausgezogen dargestellt ist.

Zwischen der Hohlwelle 20 und der Innenwelle 30 sind als Kugeln 40 ausgebildete Wälzkörper angeordnet, wie dies in dem Längsschnitt in Figur 4 deutlich erkennbar ist, der eine Teilansicht der Lenkwelle 1 in zusammengebautem Zustand zeigt.

Die Hohlwelle 20 weist in ihrer Innenfläche in Längsrichtung durchgehende Nuten 22 auf, und die Innenwelle 30 weist diesen radial gegenüberliegende, korrespondierende Nuten 32 auf, die als Wälzkörperlaufbahnen für die Kugeln 40 dienen, d.h. Kugellaufbahnen bilden. Die Kugeln 40 sind zwischen diesen Nuten 22 und 32 derart angeordnet, dass sie in Richtung der Längsachse L darin abrollen können und somit eine lineare Wälzlagerung für eine teleskopierende Relativbewegung von Innenwelle 30 und Hohlwelle 20 bilden. Außerdem wirken die Kugeln 40 als Formschlusselemente, die bezüglich einer relativen Drehung um die Längsachse L formschlüssig in die Nuten 22 und 32 eingreifen, wodurch sie ein als Lenkmoment in die Innenwelle 30 eingebrachtes Drehmoment auf die Hohlwelle 20 übertragen. In dem gezeigten Beispiel sind insgesamt vier Nuten 22 bzw. 32 in Umfangsrichtung verteilt um die Längsachse L angeordnet.

Die Kugeln 40 sind in einem Wälzlagerkäfig aufgenommen, der als Kugelkäfig 50 ausgebildet ist. Der Kugelkäfig 50 weist für jede der Kugeln 40 eine Aufnahme 51 in Form einer radial durchgehenden Aufnahmeöffnung 51 auf, in der jeweils eine Kugel 40 mit Spiel um ihren Kugelmittelpunkt frei drehbar aufgenommen ist und die radial nach innen und außen so weit vorsteht, dass sie in den Nuten 22 und 32 in Längsrichtung ungehindert um eine durch den Kugelmittelpunkt gehende Abrollachse abrollen kann. Die jeweils in Längsrichtung, d.h. in Richtung der Längsachse L, axial aufeinander folgend angeordneten Kugeln 40 bilden zusammen eine Reihe 41, auch als Kugelreihe bezeichnet. Die in Figuren 2 und 3 gezeigten Reihen 41 umfassen jeweils sechs Kugeln 40, in Figur 4 dargestellte Ausführung hat aus jeweils fünf Kugeln 40 gebildete Reihen 42. Die Länge einer Reihe 41 bzw. 42 wird definiert als Abstand der Kugelmittelpunkte der in Längsrichtung äußersten Kugeln 40 der Reihe 41 bzw. 42.

Zur Bildung der Reihen 41 bzw. 42 sind die Kugeln 40 in den Aufnahmen 51 des Kugelkäfigs 50 so aufgenommen, dass sie in definiertem Abstand zueinander gehalten und geführt sind, wobei die Kugeln 40 einer Reihe 41 bzw. 42 zwischen jeweils paarweise radial gegenüberliegenden Nuten 22 bzw. 32 abrollbar sind.

Die erfindungsgemäße Anordnung der Kugeln 40 einer Reihe 41 ist aus der Darstellung in Figur 3 deutlich entnehmbar. Die in der Zeichnung am linken Ende der Reihe 41 außen liegende erste Kugel 40 hat von der benachbarten (zweiten) Kugel 40 den ersten Abstand a1, der durch den Abstand der Kugelmittelpunkte gegeben ist und mit dem Abstand der Aufnahmen 51 korrespondiert. Auf die zweite Kugel 40 folgt der zweite Abstand b1, und danach zwischen den weiteren Kugeln 40 der Reihe 41 die Abstände b2, b3 und - zwischen der fünften und der letzten Kugel 40 - der Abstand a2. Die Länge der Reihe 41 beträgt definitionsgemäß: a1+b1+b2+b3+a2.

Erfindungsgemäß sind die Abstände a1 und a2 vom Betrag her kleiner als die Abstände b1, b2 und b3, wobei gilt: b(1,2 oder 3) > a(1 oder 2). Vorteilhafterweise ist ein Abstand b(1, 2 oder 3) das 1,2- bis 4-fache eines Abstands a(1 oder 2); besonders bevorzugt ist das Verhältnis das 1,4- bis 3-fache.

Die Anordnung der Abstände a1, b1, b2, b3, a2 kann spiegelsymmetrisch zur Mitte der Reihe 41 sein, wobei dann beispielsweise gilt: a1 = a2 und b1 = b2 = b3. Daraus resultiert dann innerhalb der Reihe 41 eine Abfolge der Abstände: a1 - b1 - b1 - b1 - a1, wobei b1 bevorzugt das 1,2- bis 4-fache von a1 beträgt, besonders bevorzugt das 1,4- bis 3-fache.

Eine vorteilhafte Weiterbildung sieht vor, dass der Abstand b2 größer ist als b1 oder b3, also dass gilt: b2 > b1 und b2 > b3. In einer bevorzugten, zur Mitte der Reihe 41 symmetrischen Anordnung ist b1 = b3, so dass in Längsrichtung L die Abfolge der Abstände lautet: a1 - b1 - b2 - b1 - a1. Dadurch sind in einer Reihe 41 drei unterschiedliche Abstände a1, b1 und b2 realisiert, was eine verbesserte Anpassung an die aufgrund der Kraftkurve zu erwartende Belastung und damit eine erhöhte Tragfähigkeit der Lenkwelle 1 ermöglicht, sowie ein optimiertes Schwingungsverhalten.

In Figur 4 ist in derselben Ansicht wie in Figur 3 eine weitere mögliche Anordnung, diesmal bestehend aus insgesamt fünf Kugeln 40 in einer axialen Reihe 42. Von dem in der Zeichnung linken Ende der Reihe 42 ist die Abfolge der Abstände: a3 - b4 - b4 - a4, so dass sich für die Reihe 42 als Gesamtlänge a3+b4+b4+a4 ergibt. Dabei kann wiederum eine zur Mitte der Reihe 42 spiegelsymmetrische Anordnung gewählt werden: a3 - b4 - b4 - a3, mit b4 > a3, und wobei bevorzugt der Abstand b4 das 1,2- bis 4-fache eines Abstands a3 ist; besonders bevorzugt ist b4 das 1,4- bis 3-fache von a3.

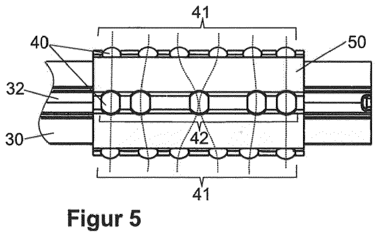

In einem Kugelkäfig 50 können eine oder mehrere Reihen 41 gemäß Figur 3 in Umfangsrichtung beabstandet realisiert sein, beispielsweise vier identische Reihen 41, beispielsweise in einer gleichmäßig über den Umfang verteilten Anordnung wie in Figur 2. Es ist ebenfalls möglich, mehrere identische Reihen 42 gemäß Figur 4 in einem Kugelkäfig 50 auszubilden. Darüber hinaus ist es erfindungsgemäß notwendig, Reihen 41 und 42, die jeweils unterschiedliche Anordnungen der Kugeln 40 aufweisen, in einem Kugelkäfig 50 miteinander zu kombinieren. Eine derartige erfindungsgemäße Anordnung ist in Figur 5 dargestellt, wobei zwei Reihen 41 in Umfangsrichtung abwechselnd mit zwei Reihen 42 kombiniert ist, von denen eine durch die Innenwelle 30 verdeckt ist. Die gestrichelt eingezeichneten Linien zeigen, wie die Kugeln 40 der Reihen 41 und 42 in Längsrichtung zueinander versetzt sind, teilweise auf Lücke gesetzt. Dadurch kann eine optimierte Drehmomentübertragung erfolgen, wobei ein verbessertes Eigenschwingungsverhalten realisierbar ist.

Es ist ebenfalls möglich, eine Reihe 41 oder 42, oder Reihen 41 und 42, in einer Lenkwelle 1 mit einer oder mehreren Reihen von äquidistant, gleichmäßig verteilt angeordneten Kugeln 40 zu kombinieren, die hier nicht dargestellt sind, aber aus dem zitierten Stand der Technik bekannt sind.

Der Kugelkäfig 50 kann bevorzugt als einstückiges Kunststoff-Spritzgussteil aus thermoplastischem Polymer hergestellt werden, wodurch die erfindungsgemäßen Abstände a1, a2, a3, a4, b1, b2, b3 und b4 als Axialabstände der Aufnahmeöffnungen 51 einfach und präzise realisierbar sind.

### Bezugszeichenliste

- 1: Lenkwelle
- 20: Hohlwelle
- 21: Gabel
- 22: Nut
- 30: Innenwelle
- 31: Gabel
- 32: Nut
- 40: Kugel
- 41, 42: Reihe
- 50: Kugelkäfig
- 51: Aufnahme
- L: Längsachse
- a1, a2, a3, a4, b1, b2, b3, b4: Abstände

### Bezugszeichenliste

- 1: Lenkwelle
- 20: Hohlwelle
- 21: Gabel
- 22: Nut
- 30: Innenwelle
- 31: Gabel
- 32: Nut
- 40: Kugel
- 41, 42: Reihe
- 50: Kugelkäfig
- 51: Aufnahme
- L: Längsachse
- a1, a2, a3, a4, b1, b2, b3, b4: Abstände

## Patentansprüche

1. Lenkwelle (1) für ein Kraftfahrzeug, umfassend eine Hohlwelle (20) und eine Innenwelle (30), welche koaxial in der Hohlwelle (20) angeordnet, relativ zur Hohlwelle (20) in Richtung der Längsachse (L) der Lenkwelle (10) axial teleskopierbar und mit der Hohlwelle (20) über in Richtung der Längsachse (L) abrollbare Kugeln (40) drehmomentschlüssig verbunden ist, wobei die Kugeln (40) in zumindest einer axialen Reihe (41, 42) angeordnet sind, wobei die in der Reihe (41, 42) zueinander benachbarte Kugeln (40) jeweils einen vorgegebenen Abstand voneinander haben, wobei zumindest einer der Abstände (a1, a2, a3, a4, b1, b2, b3, b4) zwischen den jeweils benachbarten Kugeln (40) innerhalb einer Reihe (41, 42) verschieden zu zumindest einem anderen der Abstände (a1, a2, a3, a4, b1, b2, b3, b4) ist,
**dadurch gekennzeichnet,**
**dass** zumindest zwei Reihen (41, 42) in Umfangsrichtung beabstandet zueinander angeordnet sind, wobei die Reihen (41, 42) eine unterschiedliche Anordnung der Abstände (a1, a2, a3, a4, b1, b2, b3, b4) zwischen den Kugeln (40) aufweisen.

2. Lenkwelle nach Anspruch 1, **dadurch gekennzeichnet, dass** zumindest drei der Abstände (a1, b1, b2) zwischen den Kugeln (40) innerhalb einer Reihe (41) unterschiedlich voneinander sind.

3. Lenkwelle nach Anspruch 1 oder 2, **dadurch gekennzeichnet, dass** die Abstände (a1, a2, a3, a4, b1, b2, b3, b4) an die Verteilung einer Querkraft angepasst sind.

4. Lenkwelle nach einem der vorangehenden Ansprüche, **dadurch gekennzeichnet, dass** die Abstände (a1, b1, b3, a3, b4) innerhalb einer Reihe (41, 42) beginnend von einen Ende ansteigend ausgebildet sind.

5. Lenkwelle nach einem der vorangehenden Ansprüche, **dadurch gekennzeichnet, dass** die Abstände (a1, a2, a3, a4, b1, b2, b3, b4) innerhalb einer Reihe (41, 42) einen Maximalabstand (b2, b3, b4) oder einen Minimalabstand aufweisen, und zu den Enden der Reihe (41, 42) hin abfallend oder ansteigend ausgebildet sind.

6. Lenkwelle nach einem der vorangehenden Ansprüche, **dadurch gekennzeichnet, dass** die Abstände (a1, a2, a3, a4, b1, b2, b3, b4) innerhalb einer Reihe (41, 42) symmetrisch angeordnet sind.

7. Lenkwelle nach einem der vorangehenden Ansprüche, **dadurch gekennzeichnet, dass** die Abstände (a1, a2, a3, a4, b1, b2, b3, b4) innerhalb einer Reihe (41, 42) asymmetrisch angeordnet sind.

## Claims

1. Steering shaft (1) for a motor vehicle, comprising a hollow shaft (20) and an inner shaft (30) which is arranged coaxially in the hollow shaft (20), can be telescoped axially in the direction of the longitudinal axis (L) of the steering shaft (10) relative to the hollow shaft (20), and is connected to the hollow shaft (20) in a torque-transmitting manner via balls (40) which can roll in the direction of the longitudinal axis (L), the balls (40) being arranged in at least one axial row (41, 42), the balls (40) which are adjacent with respect to one another in the row (41, 42) being in each case at a predefined spacing from one another, at least one of the spacings (a1, a2, a3, a4, b1, b2, b3, b4) between the respective adjacent balls (40) within one row (41, 42) being different from at least one other one of the spacings (a1, a2, a3, a4, b1, b2, b3, b4), **characterized in that** at least two rows (41, 42) are arranged spaced apart from one another in the circumferential direction, the rows (41, 42) having a different arrangement of the spacings (a1, a2, a3, a4, b1, b2, b3, b4) between the balls (40).

2. Steering shaft according to Claim 1, **characterized in that** at least three of the spacings (a1, b1, b2) between the balls (40) within one row (41) are different from one another.

3. Steering shaft according to Claim 1 or 2, **characterized in that** the spacings (a1, a2, a3, a4, b1, b2, b3, b4) are adapted to the distribution of a transverse force.

4. Steering shaft according to one of the preceding claims, **characterized in that** the spacings (a1, b1, b3, a3, b4) within one row (41, 42) are configured so as to increase beginning from one end.

5. Steering shaft according to one of the preceding claims, **characterized in that** the spacings (a1, a2, a3, a4, b1, b2, b3, b4) within one row (41, 42) are at a maximum spacing (b2, b3, b4) or at a minimum spacing, and are configured so as to decrease or increase towards the ends of the row (41, 42).

6. Steering shaft according to one of the preceding claims, **characterized in that** the spacings (a1, a2, a3, a4, b1, b2, b3, b4) within one row (41, 42) are arranged symmetrically.

7. Steering shaft according to one of the preceding claims, **characterized in that** the spacings (a1, a2, a3, a4, b1, b2, b3, b4) within one row (41, 42) are arranged asymmetrically.

## Revendications

1. Arbre de direction (1) pour un véhicule automobile, comprenant un arbre creux (20) et un arbre intérieur (30) qui est disposé coaxialement dans l'arbre creux (20), qui peut être déplacé axialement de manière télescopique par rapport à l'arbre creux (20) dans la direction de l'axe longitudinal (L) de l'arbre de direction (10) et qui est connecté avec transmission de couple à l'arbre creux (20) par le biais de billes (40) pouvant rouler dans la direction de l'axe longitudinal (L), les billes (40) étant disposées dans au moins une rangée axiale (41, 42), les billes (40) adjacentes les unes aux autres dans la rangée (41, 42) présentant à chaque fois un espacement prédéfini les unes des autres, au moins l'un des espacements (a1, a2, a3, a4, b1, b2, b3, b4) entre les billes respectivement adjacentes (40) à l'intérieur d'une rangée (41, 42) étant différent d'au moins un autre des espacements (a1, a2, a3, a4, b1, b2, b3, b4),
**caractérisé en ce**
**qu'**au moins deux rangées (41, 42) sont disposées à distance l'une de l'autre dans la direction périphérique, les rangées (41, 42) présentant un agencement différent des espacements (a1, a2, a3, a4, b1, b2, b3, b4) entre les billes (40).

2. Arbre de direction selon la revendication 1, **caractérisé en ce qu'**au moins trois des espacements (a1, b1, b2) entre les billes (40) à l'intérieur d'une rangée (41) sont différents les uns des autres.

3. Arbre de direction selon la revendication 1 ou 2, **caractérisé en ce que** les espacements (a1, a2, a3, a4, b1, b2, b3, b4) sont adaptés à la répartition d'une force transversale.

4. Arbre de direction selon l'une quelconque des revendications précédentes, **caractérisé en ce que** les espacements (a1, b1, b3, a3, b4) à l'intérieur d'une rangée (41, 42) sont réalisés de manière à augmenter en commençant à partir d'une extrémité.

5. Arbre de direction selon l'une quelconque des revendications précédentes, **caractérisé en ce que** les espacements (a1, a2, a3, a4, b1, b2, b3, b4) à l'intérieur d'une rangée (41, 42) présentent un espacement maximal (b2, b3, b4) ou un espacement minimal, et sont réalisés de manière à diminuer ou augmenter vers les extrémités de la rangée (41, 42) .

6. Arbre de direction selon l'une quelconque des revendications précédentes, **caractérisé en ce que** les espacements (a1, a2, a3, a4, b1, b2, b3, b4) à l'intérieur d'une rangée (41, 42) sont disposés de manière symétrique.

7. Arbre de direction selon l'une quelconque des revendications précédentes, **caractérisé en ce que** les espacements (a1, a2, a3, a4, b1, b2, b3, b4) à l'intérieur d'une rangée (41, 42) sont disposés de manière asymétrique.
